# EUROPEAN PATENT SPECIFICATION

(11) **EP 3 677 804 B1**
(45) Date of publication and mention of the grant of the patent: **15.06.2022**
(21) Application number: 18852268.4
(22) Date of filing: 23.08.2018
(51) Int. Cl.: C23C 8/02, C21D 1/06, F16C 33/62, C23C 8/26, C23C 8/80, C23C 30/00, C21D 9/40, F16C 33/64

(54) **ROLLING COMPONENT, ROLLING BEARING, ROLLING BEARING FOR AUTOMOBILE ELECTRICAL AUXILIARY EQUIPMENT, AND ROLLING BEARING FOR SPEED INCREASING/DECREASING MACHINE**
WÄLZTEIL, WÄLZLAGER, WÄLZLAGER FÜR ELEKTRISCHE ZUSATZGERÄTE VON AUTOMOBILEN UND WÄLZLAGER FÜR DREHZAHLERHÖHENDE/-VERRINGERENDE MASCHINEN
COMPOSANT ROULANT, PALIER À ROULEMENT, PALIER À ROULEMENT POUR EQUIPEMENT AUXILIAIRE ELECTRIQUE D'AUTOMOBILE ET PALIER À ROULEMENT POUR MACHINE AUGMENTANT/DIMINUANT LA VITESSE

(30) Priority: 28.08.2017 JP 2017163322; 28.08.2017 JP 2017163323; 28.08.2017 JP 2017163324; 28.08.2017 JP 2017163325; 22.08.2018 JP 2018155590
(43) Date of publication of application: 08.07.2020
(73) Proprietor: NTN Corporation, Osaka-shi, Osaka 550-0003 (JP)
(72) Inventor: MIWA, Noriaki, Kuwana-shi Mie 511-0867 (JP); SUGISAKI, Yoshinori, Kuwana-shi Mie 511-0867 (JP)
(74) Representative: Bockhorni & Brüntjen Partnerschaft Patentanwälte mbB
(86) International application number: PCT/JP2018/031213
(87) International publication number: WO 2019/044665

(56) References cited:
- EP-A1- 1 517 058
- EP-A1- 2 910 657
- EP-A1- 3 006 754
- EP-A1- 3 006 756
- EP-A1- 3 042 977
- WO-A1-2015/034044
- WO-A1-2015/128973
- DE-A1-102016 123 598
- JP-A- H02 190 615
- JP-A- 2003 227 520
- JP-A- 2006 144 828
- JP-A- 2008 138 705
- JP-A- 2014 084 938
- JP-A- 2014 185 379
- JP-A- 2016 069 695
- JP-A- 2016 151 057
- US-A1- 2014 363 115

## Description

### TECHNICAL FIELD

The present invention relates to a rolling part, a rolling bearing, a rolling bearing for automobile electric auxiliary equipment, and a rolling bearing for gearbox.

### BACKGROUND ART

When a rolling bearing is used under a condition with the entry of water, a condition involving sliding, or a condition with passage of electric current, the water or lubricant may be decomposed to generate hydrogen (this reaction may be hereinafter referred to as a "hydrogen generation reaction"). The generated hydrogen penetrates into the rolling bearing from its surface. Hydrogen in steel may cause hydrogen embrittlement.

A rolling bearing described in Japanese Patent Laying-Open No. 2000-282178 (PTL 1) and a rolling bearing described in Japanese Patent No. 4434685 (PTL 2) have been conventionally known.

In the rolling bearing described in PTL 1, the steel constituting the rolling bearing contains a lot of chromium (Cr). The Cr forms a passive film on the surface of the rolling bearing. This passive film suppresses the penetration of hydrogen into the rolling bearing from the surface.

The rolling bearing described in PTL 2 has an oxide film on its surface. This oxide film suppresses the occurrence of the hydrogen generation reaction at the surface of the rolling bearing.

JP 2016 151057 A discloses a carbo-nitrided bearing component capable of suppressing a reduction in life due to hydrogen fatigue type surface fatigue peeling.

EP 3 042 977 A1 discloses a rolling device having in which hydrogen is not easily accumulated within a roller element made of steel, and premature separation due to hydrogen embrittlement is prevented from occurring.

EP 3 006 754 A1 discloses a bearing component according to preamble of claim 1. The bearing component is composed of steel and has a carbonitrided layer formed at a surface portion including a contact surface which is a surface in contact with other components. In the bearing component, an average concentration of nitrogen in the surface portion is not lower than 0.3 mass % and not higher than 0.6 mass % and variation in nitrogen concentration in the surface portion is not higher than 0.1 mass %.

### CITATION LIST

### PATENT LITERATURE

PTL 1: Japanese Patent Laying-Open No. 2000-282178
PTL 2: Japanese Patent No. 4434685

### SUMMARY OF INVENTION

### TECHNICAL PROBLEM

However, the rolling bearing described in PTL 1, which contains a lot of Cr, easily coarsens the carbide. The coarsened carbide may cause stress concentration.

In the rolling bearing described in PTL 2, the oxide film easily flakes when the rolling bearing is used under a severe environment. At a surface newly formed by the flaking of the oxide film, the hydrogen generation reaction may occur. Therefore, when the rolling bearing described in PTL 2 is used under a severe environment, it is difficult to suppress the penetration of hydrogen.

The present invention has been made in view of the above-described problems of the prior art. Specifically, the present invention provides a rolling part that can suppress the occurrence of hydrogen embrittlement associated with the penetration of hydrogen from the surface.

### SOLUTION TO PROBLEM

A rolling part according to the invention is defined in claim 1. The rolling part is made of steel and includes a quench-hardened layer disposed at a surface of the rolling part. The hydrogen diffusion coefficient in the quench-hardened layer is less than 2.6 × 10⁻¹¹ m²/s. The rolling part can suppress the occurrence of hydrogen embrittlement associated with the penetration of hydrogen from the surface.

The quench-hardened layer contains oxide inclusions having a grain size of 3 µm or more and manganese sulfide. The number of oxide inclusions at least partially covered with the manganese sulfide is more than 40 percent of the total number of oxide inclusions. Accordingly, the rolling part can suppress the occurrence of hydrogen embrittlement associated with the penetration of hydrogen from the surface.

The rolling part includes an oxide film disposed at a surface of the rolling part. The oxide film has a thickness of 0.5 to 2 µm, both inclusive. Accordingly, the rolling part can suppress the occurrence of hydrogen embrittlement associated with the penetration of hydrogen from the surface.

In the above-described rolling part, the quench-hardened layer contains nitrogen. The hardness of the surface of the quench-hardened layer is increased, thus prolonging the life of the rolling part.

In the above-described rolling part, the nitrogen concentration in the quench-hardened layer is 0.05 to 0.6 percent by weight, both inclusive. Too high a nitrogen concentration in the quench-hardened layer would cause a large amount of Cr nitrides formed in the quench-hardened layer, thus reducing the Cr concentration in the steel. This in turn would reduce the hardenability of the quench-hardened layer. The nitrogen concentration in the above-described range can ensure good hardenability of the quench-hardened layer.

In the above-described rolling part, the austenite phase volume ratio in the quench-hardened layer is 10 to 40 percent, both inclusive. The austenite phase is lower in hydrogen diffusion coefficient than the martensite phase. Accordingly, a quench-hardened layer having a higher austenite phase volume ratio has a lower hydrogen diffusion coefficient. On the other hand, the austenite phase in the quench-hardened layer may transform into the martensite phase during use of the rolling part. Accordingly, a quench-hardened layer having too high an austenite phase volume ratio would have low dimensional stability. The austenite phase volume ratio in the above-described range can reduce the hydrogen diffusion coefficient while ensuring good dimensional stability.

In the above-described rolling part, the quench-hardened layer has a hardness of 58 to 64 HRC, both inclusive. The surface of the rolling part needs to be free from deformation when subjected to contact stress. Accordingly, the quench-hardened layer disposed at the surface of the rolling part requires a high hardness. However, a quench-hardened layer having an excessively high hardness would have a low toughness. The hardness in the above-described range can suppress the deformation of the surface of the rolling part associated with contact stress, while ensuring a high toughness at the surface of the rolling part.

In the above-described rolling part, the steel is a high carbon chrome bearing steel or a high-speed steel. The high carbon chrome bearing steel may be one of SUJ2 and SUJ3.

A rolling bearing according to the invention is defined in claims 4-6. The rolling bearing includes an inner ring, an outer ring, and a rolling element disposed between the inner ring and the outer ring. At least one of the inner ring, the outer ring, and the rolling element is the above-described rolling part.

### ADVANTAGEOUS EFFECTS OF INVENTION

A rolling part and a rolling bearing according to the invention can suppress the occurrence of hydrogen embrittlement associated with the penetration of hydrogen from the surface.

### BRIEF DESCRIPTION OF DRAWINGS

Fig. 1 is a cross-sectional view of a rolling part 10 according to a first example useful for understanding the invention.
Fig. 2 is an enlarged view of region II in Fig. 1.
Fig. 3 is a schematic diagram of a measurement device 20 for measuring the hydrogen diffusion coefficient.
Fig. 4 is a process diagram showing a method for manufacturing rolling part 10 in the first example.
Fig. 5 is a cross-sectional view of a rolling bearing 100 in the first example.
Fig. 6 is a first graph showing the rotation conditions in a rolling fatigue test.
Fig. 7 is a cross-sectional view of rolling part 10 in an embodiment of the invention.
Fig. 8 is an enlarged view of region VIII in Fig. 7.
Fig. 9 is a process diagram showing a method for manufacturing rolling part 10 in the embodiment.
Fig. 10 is a cross-sectional view of rolling bearing 100 in the according to a first embodiment of the invention.
Fig. 11 is a graph showing the rotation conditions in a rolling fatigue test.
Fig. 12 is a cross-sectional view of automobile electric auxiliary equipment in which a rolling bearing 200 according to a second embodiment of the invention is used.
Fig. 13 is a cross-sectional view of rolling bearing 200 in the second embodiment.
Fig. 14 is a cross-sectional view of a step-up gearbox 500 in which a rolling bearing 400 according to a third embodiment of the invention is used.
Fig. 15 is a cross-sectional view of rolling bearing 400 in the third embodiment.

### DESCRIPTION OF EMBODIMENTS

Embodiments of the present invention will now be described with reference to the drawings. In the following drawings, identical or corresponding parts are denoted by identical reference signs, and the description thereof is not repeated.

### (First Example Useful for Understanding the Invention)

The configuration of a rolling part in the first example useful for understanding the invention will now be described.

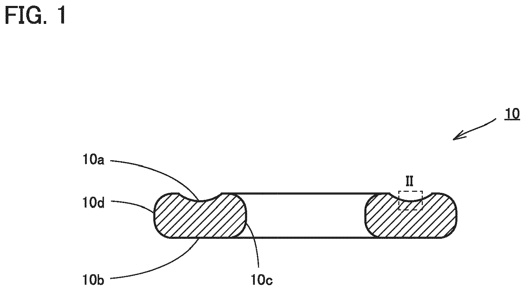

Fig. 1 is a cross-sectional view of rolling part 10 in the first example. As shown in Fig. 1, rolling part 10 in the first example is an inner ring (i.e., a shaft washer) of a thrust ball bearing. However, rolling part 10 is not limited to this. Rolling part 10 in the first example may be an outer ring (i.e., a housing washer) of a thrust ball bearing. Rolling part 10 in the first example may be a rolling element of a thrust ball bearing.

Rolling part 10 in the first example is made of steel. The steel used for rolling part 10 in the first example is, for example, a high carbon chrome bearing steel defined by the Japanese Industrial Standards (JIS4805: 2008). The steel used for rolling part 10 in the first example may be SUJ2 or SUJ3 defined by the Japanese Industrial Standards (JIS4805: 2008). The steel used for rolling part 10 in the first example may be a high-speed steel, such as M50, defined by AMS 6491.

Rolling part 10 in the first example is in the shape of a ring. Rolling part 10 in the first example has a top face 10a, a bottom face 10b, an inner periphery 10c, and an outer periphery 10d. Bottom face 10b is on the side opposite to top face 10a. Inner periphery 10c and outer periphery 10d are continuous with top face 10a and bottom face 10b. Top face 10a constitutes the raceway surface of rolling part 10 in the first example.

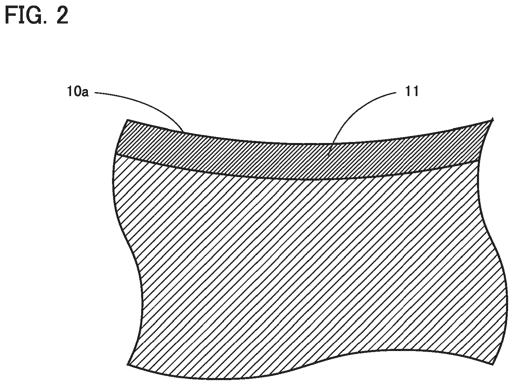

Fig. 2 is an enlarged view of region II in Fig. 1. As shown in Fig. 2, rolling part 10 in the first example includes a quench-hardened layer 11. Quench-hardened layer 11 is disposed at the surface of rolling part 10 in the first example. Specifically, quench-hardened layer 11 is disposed at top face 10a (raceway surface) of rolling part 10 in the first example.

Preferably, the hydrogen diffusion coefficient in quench-hardened layer 11 is less than 2.6 × 10⁻¹¹ m²/s. The hydrogen diffusion coefficient in quench-hardened layer 11 may be equal to or less than 2.1 × 10⁻¹¹ m²/s. The hydrogen diffusion coefficient in quench-hardened layer 11 may be equal to or less than 1.9 × 10⁻¹¹ m²/s. The hydrogen diffusion coefficient in quench-hardened layer 11 may be equal to or less than 1.6 × 10⁻¹¹ m²/s. The hydrogen diffusion coefficient in quench-hardened layer 11 may be equal to or less than 1.4 × 10⁻¹¹ m²/s. The hydrogen diffusion coefficient in quench-hardened layer 11 may be equal to or less than 0.15⁻¹¹ m²/s.

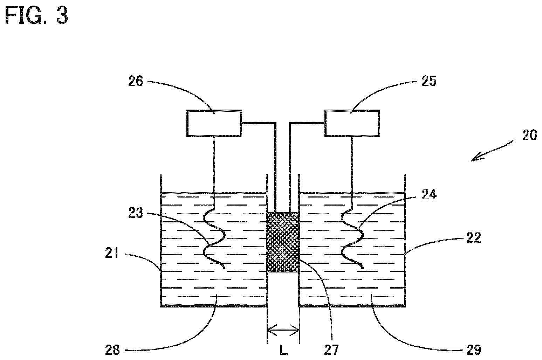

The hydrogen diffusion coefficient is measured by an electrochemical hydrogen permeation method. Fig. 3 is a schematic diagram of measurement device 20 for measuring the hydrogen diffusion coefficient. As shown in Fig. 3, measurement device 20 includes an anode tank 21, a cathode tank 22, an anode electrode 23, a cathode electrode 24, a galvanostat 25, and a potentiostat 26. Anode tank 21 is separated from cathode tank 22 by a test specimen 27. Test specimen 27 has a thickness L. Thickness L is, for example, 1 mm. Anode electrode 23 and cathode electrode 24 are made of platinum (Pt).

Anode tank 21 contains an anode solution 28 therein. Anode solution 28 is an aqueous solution of 1 mol/L sodium hydroxide. Cathode tank 22 contains a cathode solution 29 therein. Cathode solution 29 is a mixture of 0.05 mol/L sulfuric acid and thiourea. Anode electrode 23 is immersed in anode solution 28. Cathode electrode 24 is immersed in cathode solution 29.

One of the terminals of galvanostat 25 is connected to cathode electrode 24. The other terminal of galvanostat 25 is connected to test specimen 27. One of the terminals of potentiostat 26 is connected to anode electrode 23. The other terminal of potentiostat 26 is connected to test specimen 27.

In the measurement of the hydrogen diffusion coefficient, galvanostat 25 supplies an electric current to test specimen 27. This generates hydrogen on the cathode solution 29 side of test specimen 27. The generated hydrogen penetrates into test specimen 27 from its surface on the cathode solution 29 side.

The hydrogen that has penetrated into test specimen 27 transfers through test specimen 27 while diffusing. The hydrogen ionizes when reaching the surface of test specimen 27 on the anode solution 28 side. Thus, an ionization current flows. The hydrogen diffusion coefficient is determined by L²/(15.3 × tb), where tb denotes the time that elapses before the ionization current starts to flow, and L denotes the thickness of test specimen 27. The measurement of the hydrogen diffusion coefficient is performed at a temperature within the range of 20 to 25°C, both inclusive.

Quench-hardened layer 11 includes a martensite phase and an austenite phase. The austenite phase volume ratio in quench-hardened layer 11 is preferably 10 to 40 percent, both inclusive.

The austenite phase volume ratio in quench-hardened layer 11 is measured by X-ray diffraction. Specifically, the austenite phase volume ratio in quench-hardened layer 11 is determined by measuring the ratio in diffraction peak intensity between the austenite phase and the martensite phase in quench-hardened layer 11.

Quench-hardened layer 11 may contain nitrogen. Preferably, the nitrogen concentration in quench-hardened layer 11 is 0.05 to 0.6 percent by weight, both inclusive. The nitrogen concentration in quench-hardened layer 11 can be measured using an electron probe micro analyzer (EPMA).

Preferably, quench-hardened layer 11 has a hardness of 58 to 64 HRC, both inclusive. The hardness of quench-hardened layer 11 can be measured by a method defined by the JIS, Z2245: 2016.

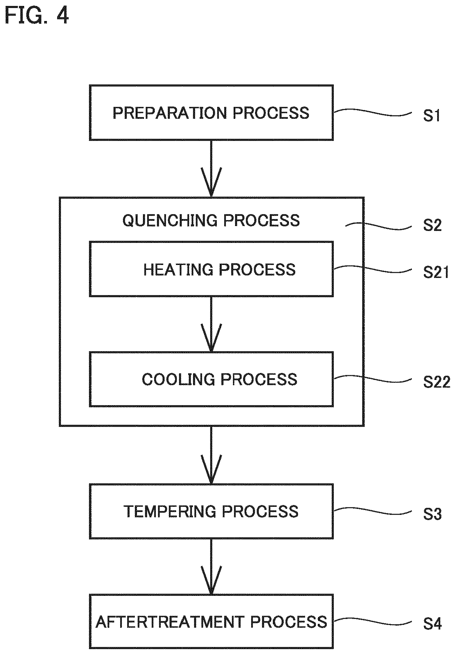

A method for manufacturing rolling part 10 in the first example will now be described. Fig. 4 is a process diagram showing a method for manufacturing rolling part 10 in the first example. As shown in Fig. 4, the method for manufacturing rolling part 10 in the first example includes a preparation process S1, a quenching process S2, a tempering process S3, and an aftertreatment process S4. Quenching process S2 follows preparation process S1. Tempering process S3 follows quenching process S2. Aftertreatment process S4 follows tempering process S3.

In preparation process S1, a workpiece is prepared, which will be formed into rolling part 10 by performing the method for manufacturing rolling part 10 in the first example. If rolling part 10 in the first example is an inner ring or an outer ring of a thrust ball bearing for example, the workpiece is a ring-shaped member made of steel. If rolling part 10 in the first example is a rolling element of a thrust ball bearing for example, the workpiece is a spherical member made of steel.

The steel constituting the workpiece is, for example, a bearing steel. Preferably, the steel constituting the workpiece is a high carbon chrome bearing steel defined by the Japanese Industrial Standards (JIS4805: 2008). The steel constituting the workpiece may be SUJ2 or SUJ3 defined by the Japanese Industrial Standards (JIS4805: 2008). The steel constituting the workpiece may be a high-speed steel, such as M50, defined by AMS 6491.

In quenching process S2, the steel constituting the workpiece is quenched. Quenching process S2 includes a heating process S21 and a cooling process S22. In heating process S21, the workpiece is heated. In heating process S21, the workpiece is heated to a temperature equal to or higher than the A₁ point of the steel constituting the workpiece (hereinafter referred to as a "heating temperature"). The heating temperature is, for example, 800 to 900°C, both inclusive.

In heating process S21, the workpiece is heated in, for example, a heating furnace. The atmosphere in the heating furnace is, for example, an RX gas. A nitrogen-containing gas may be added to the atmosphere in the heating furnace. Specific examples of the nitrogen-containing gas include an ammonia gas. In heating process S21, the workpiece is heated to the heating temperature and then retained at the heating temperature for predetermined time (hereinafter referred to as "retention time").

In heating process S21, a longer retention time or a higher heating temperature causes a larger amount of carbon to elute into the austenite phase in the steel material constituting the workpiece. A larger amount of carbon contained in the austenite phase tends to result in a larger amount of residual austenite phase. Accordingly, the austenite phase volume ratio in quench-hardened layer 11 can be controlled by controlling the retention time and the heating temperature.

An increased amount of austenite stabilizing elements in the steel material constituting the workpiece tends to result in an increased amount of residual austenite phase. Accordingly, the austenite phase volume ratio in quench-hardened layer 11 can be controlled by employing a steel type that contains a lot of austenite stabilizing alloy elements as the steel material constituting the workpiece, or by adding a nitrogen-containing gas to the heating atmosphere in heating process S21.

The nitrogen in the steel material constituting the workpiece forms nitrides by reacting with, for example, Cr in the steel material constituting the workpiece. The nitrides, finely dispersed in the steel material constituting the workpiece, harden the steel material constituting the workpiece. Also, since the nitrides act as hydrogen trap sites, the hydrogen diffusion coefficient is decreased. Therefore, in heating process S21, the hardness and the hydrogen diffusion coefficient of quench-hardened layer 11 can be controlled by controlling the concentration of the nitrogen-containing gas, the heating temperature, and the retention time.

In cooling process S22, the workpiece is cooled. In cooling process S22, the workpiece is cooled from the heating temperature to a temperature equal to or less than the Ms point of the steel constituting the workpiece (hereinafter referred to as a "cooling temperature"). In cooling the workpiece in cooling process S22, any known coolant may be used. The coolant used for cooling the workpiece is, for example, oil or water.

The cooling temperature and the cooling rate in cooling process S22 affect the amount of martensite phase generated in cooling process S22 (or, from another perspective, affect the amount of austenite phase remaining after cooling process S22). Accordingly, the austenite phase volume ratio in quench-hardened layer 11 can also be controlled by controlling the cooling temperature and the cooling rate.

In tempering process S3, the steel constituting the workpiece is tempered. The tempering of the workpiece is performed by retaining the workpiece at a temperature of less than the A₁ point (hereinafter referred to as a "tempering temperature") for predetermined time (hereinafter referred to as "tempering time"). The tempering temperature is, for example, 180°C. The tempering time is, for example, two hours.

In tempering process S3, the austenite phase that did not transform into the martensite phase in cooling process S22 is decomposed into a ferrite phase and a carbide phase. The amount of austenite phase which is decomposed into the ferrite phase and the carbide phase is changed by controlling the tempering temperature and the tempering time. Accordingly, the austenite phase volume ratio in quench-hardened layer 11 can also be controlled by controlling the tempering temperature and the tempering time.

In aftertreatment process S4, aftertreatments are performed on the workpiece. In aftertreatment process S4, the cleaning and machining (e.g., grinding and polishing) of the workpiece are performed, for example. In this way, rolling part 10 in the first example is manufactured.

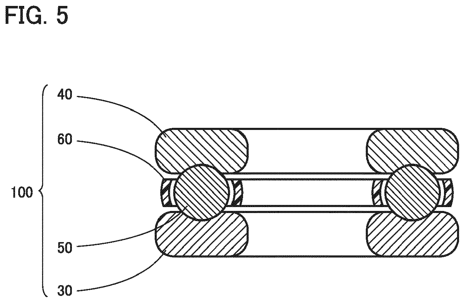

The configuration of rolling bearing 100 in the first example will now be described. Fig. 5 is a cross-sectional view of rolling bearing 100 in the first example. As shown in Fig. 5, rolling bearing 100 in the first example is a thrust ball bearing. However, rolling bearing 100 in the first example is not limited to this.

Rolling bearing 100 in the first example includes an inner ring 30, an outer ring 40, rolling elements 50, and a cage 60. Inner ring 30 and outer ring 40 are disposed in such a way that their respective raceway surfaces face each other. Rolling elements 50 are disposed between inner ring 30 and outer ring 40.

Cage 60 is disposed between inner ring 30 and outer ring 40. Cage 60 has through holes. Rolling elements 50 pass through the through holes in cage 60, thus being circumferentially spaced. Cage 60 is made of, for example, a resin material.

At least one of inner ring 30, outer ring 40, and rolling element 50 is the above-described rolling part 10 in the first example. That is, at least one of the raceway surface of inner ring 30, the raceway surface of outer ring 40, and the rolling contact surface of rolling element 50 includes the above-described quench-hardened layer 11.

The advantageous effects of rolling part 10 in the first example will now be described.

As described above, in rolling part 10 in the first example, the hydrogen diffusion coefficient in quench-hardened layer 11 is less than 2.6 × 10⁻¹¹ m²/s. Accordingly, in rolling part 10 in the first example, it takes a long time for the hydrogen to diffuse inside quench-hardened layer 11 after entering from the surface. Thus, rolling part 10 in the first example can suppress the occurrence of hydrogen embrittlement associated with the penetration of hydrogen from the surface.

Nitrogen forms nitrides by reacting with alloy elements in the steel constituting rolling part 10 in the first example. Accordingly, if quench-hardened layer 11 contains nitrogen, the nitride content in quench-hardened layer 11 is increased, thus allowing quench-hardened layer 11 to have a decreased hydrogen diffusion coefficient and an increased hardness.

If the nitrogen concentration in quench-hardened layer 11 is more than 0.6 percent by weight, a large amount of Cr will react with nitrogen to form nitrides. The Cr that has reacted with nitrogen to form nitrides does not contribute to the improvement in the hardenability of quench-hardened layer 11. On the other hand, if the nitrogen concentration in quench-hardened layer 11 is less than 0.05 percent by weight, the amount of nitrides is insufficient to contribute to quench-hardened layer 11 having an increased hardness and a decreased hydrogen diffusion coefficient. Considering this, the nitrogen concentration in quench-hardened layer 11 being 0.05 to 0.6 percent by weight, both inclusive, can ensure good hardenability of quench-hardened layer 11, while achieving an increased hardness and a decreased hydrogen diffusion coefficient with introduced nitrogen.

The austenite phase is lower in hydrogen diffusion coefficient than the martensite phase. Accordingly, quench-hardened layer 11 having a higher austenite phase volume ratio has a lower hydrogen diffusion coefficient. On the other hand, the austenite phase in quench-hardened layer 11 may transform into the martensite phase during use of rolling part 10. Accordingly, quench-hardened layer 11 having too high an austenite phase volume ratio would have low dimensional stability. Considering this, the austenite phase volume ratio in quench-hardened layer 11 being 10 to 40 percent, both inclusive, can reduce the hydrogen diffusion coefficient while ensuring good dimensional stability.

The surface (raceway surface) of rolling part 10 in the first example needs to be free from deformation when subjected to contact stress. Accordingly, quench-hardened layer 11 disposed at the surface of rolling part 10 in the first example requires a high hardness. However, quench-hardened layer 11 having an excessively high hardness would have a low toughness. Considering this, quench-hardened layer 11 having a hardness of 58 to 64 HRC, both inclusive, can suppress the deformation of the surface of rolling part 10 in the first example associated with contact stress, while ensuring a high toughness at the surface of rolling part 10 in the first example.

A rolling fatigue test conducted for rolling part 10 in the first example will now be described.

### <Test Materials>

Table 1 shows the conditions for producing the test materials used for the rolling fatigue test, the nitrogen concentration in quench-hardened layer 11, the austenite phase volume ratio in quench-hardened layer 11, and the hydrogen diffusion coefficient in quench-hardened layer 11. As shown in table 1, the steel type used for test materials 1 to 3 was SUJ2. The steel type used for test materials 4 and 5 was SUJ3. The steel type used for test material 6 was M50.

For test materials 1 and 4, heating process S21 was performed at a heating temperature of 850°C under an RX gas atmosphere. For test material 6, heating process S21 was performed at a heating temperature of about 1100°C under an RX gas atmosphere. For test materials 2, 3 and 5, heating process S21 was performed at a heating temperature of 850°C under an RX gas atmosphere with an ammonia gas added. For test materials 2 and 5, the ammonia gas concentration was adjusted so that the nitrogen concentration in quench-hardened layer 11 would be 0.2 percent by weight. For test material 3, the ammonia gas concentration was adjusted so that the nitrogen concentration in quench-hardened layer 11 would be 0.4 percent by weight. For test materials 1 to 6, tempering process S3 was performed at a tempering temperature of 180°C for a tempering time of two hours (120 minutes).

In quench-hardened layer 11 with test material 1, the austenite phase volume ratio was 8.9 percent. In quench-hardened layer 11 with test material 2, the austenite phase volume ratio was 21.7 percent.

In quench-hardened layer 11 with test material 3, the austenite phase volume ratio was 29.6 percent. In quench-hardened layer 11 with test material 4, the austenite phase volume ratio was 20.3 percent. In quench-hardened layer 11 with test material 5, the austenite phase volume ratio was 31.8 percent. In quench-hardened layer 11 with test material 6, the austenite phase volume ratio was 3.3 percent.

In quench-hardened layer 11 with test material 1, the hydrogen diffusion coefficient was 2.63 × 10⁻¹¹ m²/s. In quench-hardened layer 11 with test material 2, the hydrogen diffusion coefficient was 2.09 × 10⁻¹¹ m²/s.

In quench-hardened layer 11 with test material 3, the hydrogen diffusion coefficient was 1.60 × 10⁻¹¹ m²/s. In quench-hardened layer 11 with test material 4, the hydrogen diffusion coefficient was 1.88 × 10⁻¹¹ m²/s. In quench-hardened layer 11 with test material 5, the hydrogen diffusion coefficient was 1.40 × 10⁻¹¹ m²/s. In quench-hardened layer 11 with test material 6, the hydrogen diffusion coefficient was 0.15 × 10⁻¹¹ m²/s.

**[Table 1]**

| | Steel type | Nitrogen concentration in quench-hardened layer (wt%) | Austenite phase volume ratio (%) | Hydrogen diffusion coefficient (10⁻¹¹ m²/s) |
|---|---|---|---|---|
| Test material 1 | SUJ2 | 0.0 | 8.9 | 2.63 |
| Test material 2 | SUJ2 | 0.2 | 21.7 | 2.09 |
| Test material 3 | SUJ2 | 0.4 | 29.6 | 1.60 |
| Test material 4 | SUJ3 | 0.0 | 20.3 | 1.88 |
| Test material 5 | SUJ3 | 0.2 | 31.8 | 1.40 |
| Test material 6 | M50 | 0.0 | 3.3 | 0.15 |

### <Method for Rolling Fatigue Test>

Thrust ball bearings were constructed of the test materials. The rolling elements of each thrust ball bearing were steel balls made of SUS440C. For each thrust ball bearing, a mixture of glycol-based lubricating oil and pure water was used as a lubricant. Thus, each thrust ball bearing was placed in a situation where hydrogen might penetrate into it from its raceway surface.

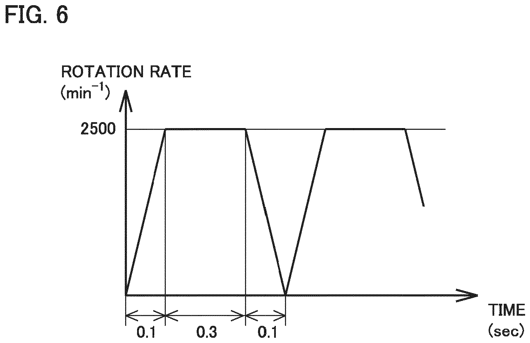

The rolling fatigue test was performed by rotating the inner ring relative to the outer ring with an axial load of 4.9 kN being applied to each thrust ball bearing (in this state, the maximum contact pressure between the raceway surface and the rolling elements was 2.3 GPa by elastic Hertz contact calculation). Fig. 6 is a first graph showing the rotation conditions in the rolling fatigue test. As shown in Fig. 6, the inner ring was rotated relative to the outer ring on a 0.5-second cycle.

In the 0.5 seconds, for the first 0.1 seconds, the rotation rate was linearly increased from 0 rotations per minute to 2500 rotations per minute. For the next 0.3 seconds, the rotation rate was maintained at 2500 rotations per minute. For the next 0.1 seconds, the rotation rate was linearly decreased from 2500 rotations per minute to 0 rotations per minute.

### <Results of Rolling Fatigue Test>

Table 2 shows the results of the rolling fatigue test. In table 2, L₁₀ and L₅₀ respectively denote the 10 percent life and the 50 percent life obtained by fitting the flaking life of the thrust ball bearing constructed of each test material (i.e., the time that elapses before flaking occurs at the raceway surface), to the two-parameter Weibull distribution; and e denotes a Weibull slope (shape parameter) of the two-parameter Weibull distribution.

**[Table 2]**

| | L₁₀ (h) | L₅₀ (h) | Shape parameter e |
|---|---|---|---|
| Test material 1 | 44.3 | 120 | 1.89 |
| Test material 2 | 79.7 | 152 | 2.92 |
| Test material 3 | 127 | 186 | 4.94 |
| Test material 4 | 79.5 | 148 | 3.02 |
| Test material 5 | 140 | 170 | 9.82 |
| Test material 6 | 285 | 377 | 6.76 |

As shown in table 2, the thrust ball bearings constructed of test materials 2 to 6 exhibited a longer flaking life than the thrust ball bearing constructed of test material 1. As described above, in quench-hardened layer 11 with test material 1, the hydrogen diffusion coefficient was equal to or more than 2.6 × 10⁻¹¹ m²/s; whereas in quench-hardened layers 11 with test materials 2 to 6, the hydrogen diffusion coefficient was less than 2.6 × 10⁻¹¹ m²/s. This comparison experimentally revealed that quench-hardened layer 11 having a hydrogen diffusion coefficient of less than 2.6 × 10⁻¹¹ m²/s can suppress the occurrence of hydrogen embrittlement associated with the penetration of hydrogen from the surface.

As described above, in quench-hardened layer 11 with test material 1, the austenite phase volume ratio was less than 10 percent; whereas in quench-hardened layers 11 with test materials 2 to 5, the austenite phase volume ratio was within the range of 10 to 40 percent, both inclusive. This comparison experimentally revealed that quench-hardened layer 11 having an austenite phase volume ratio within the range of 10 to 40 percent, both inclusive, can suppress the occurrence of hydrogen embrittlement associated with the penetration of hydrogen from the surface.

The thrust ball bearing constructed of test material 5 exhibited a longer flaking life than the thrust ball bearing constructed of test material 4. As described above, quench-hardened layer 11 with test material 4 did not contain nitrogen, whereas quench-hardened layer 11 with test material 5 contained nitrogen. This comparison experimentally revealed that quench-hardened layer 11 containing nitrogen can more reliably suppress the occurrence of hydrogen embrittlement associated with the penetration of hydrogen from the surface.

### (Second Example Useful for Understanding the Invention)

The configuration of rolling part 10 in the second example useful for understanding the invention will now be described. The following mainly describes the differences from rolling part 10 in the first example, and the redundant description is not repeated.

Rolling part 10 in the second example is in the shape of a ring. Rolling part 10 in the second example has top face 10a, bottom face 10b, inner periphery 10c, and outer periphery 10d. Rolling part 10 in the second example includes quench-hardened layer 11. In these respects, the rolling part in the second example is the same as the rolling part in the first example in configuration.

In rolling part 10 in the second example, quench-hardened layer 11 contains oxide inclusions and manganese sulfide (MnS). In this respect, rolling part 10 in the second example is different from rolling part 10 in the first example.

Examples of the oxide inclusions include aluminum oxide (Al₂O₃) and calcium oxide. Some of the oxide inclusions have a grain size of equal to or more than a reference value. The size of the oxide inclusions (grain size) is measured by microscope or energy dispersive X-ray spectrometry (EDX).

The oxide inclusions having a grain size of equal to or more than the reference value are at least partially covered with MnS. The state in which the oxide inclusions are at least partially covered with MnS refers to the state in which the surfaces of the oxide inclusions are at least partially in contact with MnS. Whether or not the oxide inclusions are at least partially covered with MnS can be determined by observing a cross section of quench-hardened layer 11 by optical microscope.

The number of oxide inclusions having a grain size of equal to or more than the reference value and at least partially covered with MnS is more than 40 percent of the total number of oxide inclusions having a grain size of equal to or more than the reference value. From another perspective, the relation of Y/X > 0.4 is satisfied, where X denotes the total number of oxide inclusions having a grain size of equal to or more than the reference value, and Y denotes the number of oxide inclusions having a grain size of equal to or more than the reference value and at least partially covered with MnS.

The Y/X value is preferably 0.5 or more. The Y/X value is more preferably 0.9 or more. The above-described reference value is 3 µm or more. The reference value may be 5 µm or more. The reference value may be 10 µm or more.

The Y/X value is determined in accordance with the following procedure. Firstly, a 30 mm square region is identified in a cross section of quench-hardened layer 11 (hereinafter, the region is referred to as a "measurement region"). The measurement region may be at any location. Secondly, the measurement region is observed by optical microscope to identify 17 oxide inclusions having a grain size of equal to or more than the reference value, in descending order of grain size (hereinafter, these oxide inclusions are referred to as "measurement object inclusions"). That is, the X value is 17. Thirdly, the measurement object inclusions are observed by optical microscope to identify the measurement object inclusions that are at least partially covered with MnS, thus obtaining the Y value. Then, Y/X is determined using the X value and the Y value.

A method for manufacturing rolling part 10 in the second example will now be described. The following mainly describes the differences from the method for manufacturing rolling part 10 in the first example, and the redundant description is not repeated.

The method for manufacturing rolling part 10 in the second example is the same as the method for manufacturing rolling part 10 in the first example in that both include preparation process S1, quenching process S2, tempering process S3, and aftertreatment process S4. However, the method for manufacturing rolling part 10 in the second example is different from the method for manufacturing rolling part 10 in the first example in the details of preparation process S1.

When the molten steel smelted in a converter furnace is cooled into slabs, a low cooling rate would tend to cause MnS to precipitate separately from the oxide inclusions. On the other hand, when the molten steel smelted in a converter furnace is cooled into slabs, a high cooling rate would tend to cause MnS to precipitate with the oxide inclusions as precipitation nucleus. Accordingly, in the method for manufacturing rolling part 10 in the second example, by adjusting the cooling rate of the molten steel smelted in a converter furnace to form slabs, the ratio of oxide inclusions that are covered with MnS can be adjusted.

The advantageous effects of rolling part 10 in the second example will now be described. The following mainly describes the differences from the advantageous effects of rolling part 10 in the first example, and the redundant description is not repeated.

Hydrogen that has penetrated into steel has the property of accumulating in the tensile stress field. Stress concentration easily occurs around the oxide inclusions having a grain size of 3 µm or more. Therefore, around the oxide inclusions having a grain size of 3 µm or more, hydrogen embrittlement easily occurs due to the hydrogen accumulation.

MnS is soft (the hardness of MnS is about 150 Hv). Accordingly, stress concentration is relaxed around the oxide inclusions covered with MnS. In rolling part 10 in the second example, the number of oxide inclusions having a grain size of 3 µm or more and at least partially covered with MnS is more than 40 percent of the total number of oxide inclusions having a grain size of 3 µm or more. Therefore, rolling part 10 in the second example can suppress the accumulation of hydrogen, thus suppressing the occurrence of hydrogen embrittlement.

A rolling fatigue test conducted for rolling part 10 in the second example will now be described.

### <Test Materials>

Table 3 shows the conditions for producing the test materials used for the rolling fatigue test, the Y/X value, the nitrogen concentration in quench-hardened layer 11, the austenite phase volume ratio in quench-hardened layer 11, and the hydrogen diffusion coefficient in quench-hardened layer 11. As shown in table 1, the steel type used for test materials 7 to 11 was SUJ2. The steel type used for test materials 12 and 13 was SUJ3. The steel type used for test material 14 was M50.

In quench-hardened layers 11 with test materials 7 and 10 to 13, the Y/X value was 0.24. In quench-hardened layers 11 with test materials 8 and 9, the Y/X value was 0.41. In quench-hardened layer 11 with test material 14, the Y/X value was 0.10.

For test materials 7, 8 and 12, heating process S21 was performed at a heating temperature of 850°C under an RX gas atmosphere. For test material 14, heating process S21 was performed at a heating temperature of about 1100°C under an RX gas atmosphere. For test materials 9, 10, 11 and 13, heating process S21 was performed at a heating temperature of 850°C under an RX gas atmosphere with an ammonia gas added. For test materials 10 and 13, the ammonia gas concentration was adjusted so that the nitrogen concentration in quench-hardened layer 11 would be 0.2 percent by weight. For test materials 9 and 11, the ammonia gas concentration was adjusted so that the nitrogen concentration in quench-hardened layer 11 would be 0.4 percent by weight. For test materials 7 to 14, tempering process S3 was performed at a tempering temperature of 180°C for a tempering time of two hours (120 minutes).

In quench-hardened layer 11 with test material 7, the austenite phase volume ratio was 8.9 percent. In quench-hardened layer 11 with test material 8, the austenite phase volume ratio was 9.1 percent. In quench-hardened layer 11 with test material 9, the austenite phase volume ratio was 30.2 percent. In quench-hardened layer 11 with test material 10, the austenite phase volume ratio was 21.7 percent.

In quench-hardened layer 11 with test material 11, the austenite phase volume ratio was 29.6 percent. In quench-hardened layer 11 with test material 12, the austenite phase volume ratio was 20.3 percent. In quench-hardened layer 11 with test material 13, the austenite phase volume ratio was 31.8 percent. In quench-hardened layer 11 with test material 14, the austenite phase volume ratio was 3.3 percent.

In quench-hardened layer 11 with test material 7, the hydrogen diffusion coefficient was 2.63 × 10⁻¹¹ m²/s. In quench-hardened layer 11 with test material 8, the hydrogen diffusion coefficient was 2.62 × 10⁻¹¹ m²/s. In quench-hardened layer 11 with test material 9, the hydrogen diffusion coefficient was 1.60 × 10⁻¹¹ m²/s. In quench-hardened layer 11 with test material 10, the hydrogen diffusion coefficient was 2.09 × 10⁻¹¹ m²/s. In quench-hardened layer 11 with test material 11, the hydrogen diffusion coefficient was 1.60 × 10⁻¹¹ m²/s. In quench-hardened layer 11 with test material 12, the hydrogen diffusion coefficient was 1.88 × 10⁻¹¹ m²/s. In quench-hardened layer 11 with test material 13, the hydrogen diffusion coefficient was 1.40 × 10⁻¹¹ m²/s. In quench-hardened layer 11 with test material 14, the hydrogen diffusion coefficient was 0.15 × 10⁻¹¹ m²/s.

**[Table 3]**

| | Steel type | Y/X | Nitrogen concentration in quench-hardened layer (wt%) | Austenite phase volume ratio (%) | Hydrogen diffusion coefficient (10⁻¹¹ m²/s) |
|---|---|---|---|---|---|
| Test material 7 | SUJ2 | 0.24 | 0.0 | 8.9 | 2.63 |
| Test material 8 | SUJ2 | 0.41 | 0.0 | 9.1 | 2.62 |
| Test material 9 | SUJ2 | 0.41 | 0.4 | 30.2 | 1.60 |
| Test material 10 | SUJ2 | 0.24 | 0.2 | 21.7 | 2.09 |
| Test material 11 | SUJ2 | 0.24 | 0.4 | 29.6 | 1.60 |
| Test material 12 | SUJ3 | 0.24 | 0.0 | 20.3 | 1.88 |
| Test material 13 | SUJ3 | 0.24 | 0.2 | 31.8 | 1.40 |
| Test material 14 | M50 | 0.10 | 0.0 | 3.3 | 0.15 |

### <Method for Rolling Fatigue Test>

Thrust ball bearings were constructed of the test materials. The rolling elements of each thrust ball bearing were steel balls made of SUS440C. For each thrust ball bearing, a mixture of glycol-based lubricating oil and pure water was used as a lubricant. Thus, each thrust ball bearing was placed in a situation where hydrogen might penetrate into it from its raceway surface.

The rolling fatigue test was performed by rotating the inner ring relative to the outer ring with an axial load of 4.9 kN being applied to each thrust ball bearing (in this state, the maximum contact pressure between the raceway surface and the rolling elements was 2.3 GPa by elastic Hertz contact calculation). As shown in Fig. 6, the inner ring was rotated relative to the outer ring on a 0.5-second cycle.

In the 0.5 seconds, for the first 0.1 seconds, the rotation rate was linearly increased from 0 rotations per minute to 2500 rotations per minute. For the next 0.3 seconds, the rotation rate was maintained at 2500 rotations per minute. For the next 0.1 seconds, the rotation rate was linearly decreased from 2500 rotations per minute to 0 rotations per minute.

### <Results of Rolling Fatigue Test>

Table 4 shows the results of the rolling fatigue test. In table 4, L₁₀ and L₅₀ respectively denote the 10 percent life and the 50 percent life obtained by fitting the flaking life of the thrust ball bearing constructed of each test material (i.e., the time that elapses before flaking occurs at the raceway surface), to the two-parameter Weibull distribution; and e denotes a Weibull slope (shape parameter) of the two-parameter Weibull distribution.

**[Table 4]**

| | L₁₀ (h) | L₅₀ (h) | Shape parameter e |
|---|---|---|---|
| Test material 7 | 44.3 | 120 | 1.89 |
| Test material 8 | 159 | 220 | 5.82 |
| Test material 9 | 193 | 241 | 8.46 |
| Test material 10 | 79.7 | 152 | 2.92 |
| Test material 11 | 127 | 186 | 4.94 |
| Test material 12 | 79.5 | 148 | 3.02 |
| Test material 13 | 140 | 170 | 9.82 |
| Test material 14 | 285 | 377 | 6.76 |

As shown in table 4, the thrust ball bearing constructed of test material 8 exhibited a longer flaking life than the thrust ball bearing constructed of test material 7. With test material 8, the Y/X value was more than 0.4; whereas with test material 7, the Y/X value was equal to or less than 0.4. This comparison experimentally revealed that the Y/X value being more than 0.4 can suppress the occurrence of hydrogen embrittlement associated with the penetration of hydrogen from the surface.

The thrust ball bearings constructed of test materials 10 to 14 exhibited a longer flaking life than the thrust ball bearing constructed of test material 7. In quench-hardened layer 11 with test material 7, the hydrogen diffusion coefficient was equal to or more than 2.6 × 10⁻¹¹ m²/s; whereas in quench-hardened layers 11 with test materials 10 to 14, the hydrogen diffusion coefficient was less than 2.6 × 10⁻¹¹ m²/s. This comparison experimentally revealed that quench-hardened layer 11 having a hydrogen diffusion coefficient of less than 2.6 × 10⁻¹¹ m²/s can suppress the occurrence of hydrogen embrittlement associated with the penetration of hydrogen from the surface.

As described above, in quench-hardened layer 11 with test material 7, the austenite phase volume ratio was less than 10 percent; whereas in quench-hardened layers 11 with test materials 10 to 13, the austenite phase volume ratio was within the range of 10 to 40 percent, both inclusive. This comparison experimentally revealed that quench-hardened layer 11 having an austenite phase volume ratio within the range of 10 to 40 percent, both inclusive, can suppress the occurrence of hydrogen embrittlement associated with the penetration of hydrogen from the surface.

The thrust ball bearing constructed of test material 13 exhibited a longer flaking life than the thrust ball bearing constructed of test material 12. Quench-hardened layer 11 with test material 12 did not contain nitrogen, whereas quench-hardened layer 11 with test material 13 contained nitrogen. This comparison experimentally revealed that quench-hardened layer 11 containing nitrogen can more reliably suppress the occurrence of hydrogen embrittlement associated with the penetration of hydrogen from the surface.

The thrust ball bearing constructed of test material 9 exhibited a longer flaking life than the thrust ball bearing constructed of test material 8. In quench-hardened layer 11 with test material 8, the hydrogen diffusion coefficient was equal to or more than 2.6 × 10⁻¹¹ m²/s; whereas in quench-hardened layer 11 with test material 9, the hydrogen diffusion coefficient was less than 2.6 × 10⁻¹¹ m²/s. This comparison experimentally revealed that quench-hardened layer 11 having a hydrogen diffusion coefficient of less than 2.6 × 10⁻¹¹ m²/s and having a Y/X value of more than 0.4 can more reliably suppress the occurrence of hydrogen embrittlement associated with the penetration of hydrogen from the surface.

With test material 8, the austenite phase volume ratio was less than 10 percent; whereas with test material 9, the austenite phase volume ratio was within the range of 10 to 40 percent, both inclusive. This comparison experimentally revealed that quench-hardened layer 11 having an austenite phase volume ratio within the range of 10 to 40 percent, both inclusive, and having a Y/X value of more than 0.4 can more reliably suppress the occurrence of hydrogen embrittlement associated with the penetration of hydrogen from the surface.

Quench-hardened layer 11 with test material 9 contained nitrogen, whereas quench-hardened layer 11 with test material 8 did not contain nitrogen. This comparison experimentally revealed that quench-hardened layer 11 containing nitrogen and having a Y/X value of more than 0.4 can more reliably suppress the occurrence of hydrogen embrittlement associated with the penetration of hydrogen from the surface.

### (Embodiment of the Invention)

The configuration of rolling part 10 according to an embodiment of the invention will now be described. The following mainly describes the differences from rolling part 10 in the first example, and the redundant description is not repeated.

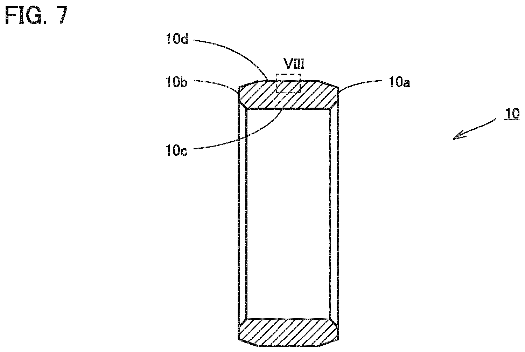

Fig. 7 is a cross-sectional view of rolling part 10 in the embodiment. As shown in Fig. 7, rolling part 10 in the embodiment is an inner ring of a radial needle bearing. However, rolling part 10 in the embodiment is not limited to this. Outer periphery 10d constitutes the raceway surface of rolling part 10 in the embodiment.

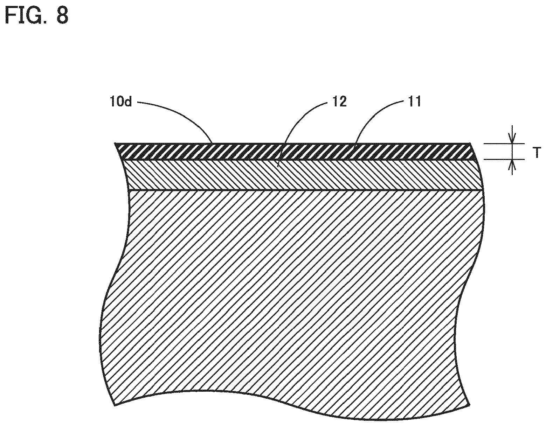

Fig. 8 is an enlarged view of region VIII in Fig. 7. As shown in Fig. 8, rolling part 10 in the embodiment includes an oxide film 12. Oxide film 12 is disposed at the surface of rolling part 10 in the embodiment. Specifically, oxide film 12 is disposed at outer periphery 10d of rolling part 10 in the embodiment. Oxide film 12 has a thickness T. Thickness T is 0.5 to 2 µm, both inclusive.

A method for manufacturing rolling part 10 in the embodiment will now be described. The following mainly describes the differences from the method for manufacturing rolling part 10 in the first example, and the redundant description is not repeated.

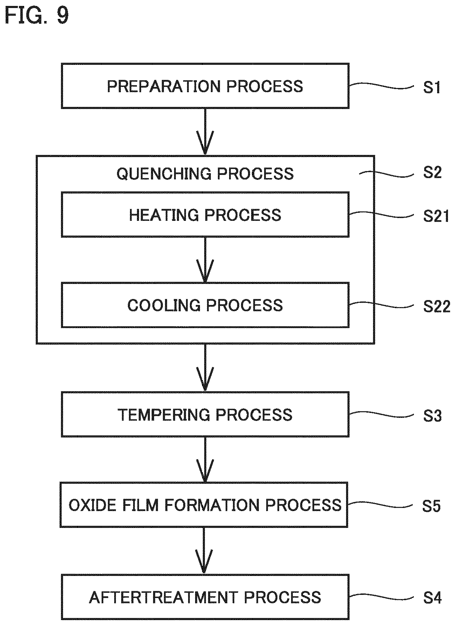

Fig. 9 is a process diagram showing a method for manufacturing rolling part 10 in the embodiment. As shown in Fig. 9, the method for manufacturing rolling part 10 in the embodiment includes preparation process S1, quenching process S2, tempering process S3, and aftertreatment process S4. In this respect, the method for manufacturing rolling part 10 in the embodiment is the same as the method for manufacturing rolling part 10 in the first example.

However, the method for manufacturing rolling part 10 in the embodiment is different from the method for manufacturing rolling part 10 in the first example in that the embodiment further includes an oxide film formation process S5. Oxide film formation process S5 is performed after tempering process S3 and before aftertreatment process S4.

In oxide film formation process S5, oxide film 12 is formed on the surface of the workpiece. Oxide film 12 is formed by, for example, immersing the workpiece in a solution containing sodium hydroxide as a main component. Thickness T can be controlled by controlling the solution concentration and the immersing time.

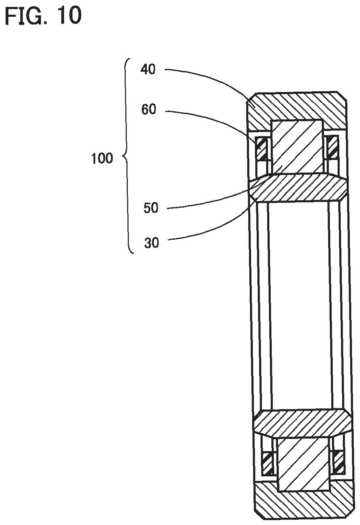

The configuration of rolling bearing 100 according to a first embodiment of the invention will now be described. Fig. 10 is a cross-sectional view of rolling bearing 100 in the first embodiment. As shown in Fig. 10, rolling bearing 100 in the first embodiment is a radial needle bearing. However, rolling bearing 100 in the first embodiment is not limited to this.

Rolling bearing 100 in the first embodiment includes inner ring 30, outer ring 40, rolling elements 50, and cage 60. Inner ring 30 and outer ring 40 are disposed in such a way that their respective raceway surfaces face each other. Rolling elements 50 are disposed between inner ring 30 and outer ring 40.

Cage 60 is disposed between inner ring 30 and outer ring 40. Cage 60 has a plurality of through holes. Rolling elements 50 pass through the through holes in cage 60, thus being circumferentially spaced. Cage 60 is made of, for example, a resin material. At least one of inner ring 30, outer ring 40, and rolling element 50 is the above-described rolling part 10. That is, at least one of the raceway surface of inner ring 30, the raceway surface of outer ring 40, and the rolling contact surface of rolling element 50 includes the above-described quench-hardened layer 11 and oxide film 12.

The advantageous effects of rolling part 10 and rolling bearing 100 in the first embodiment will now be described. The following mainly describes the differences from the advantageous effects of rolling part 10 and rolling bearing 100 in the first example, and the redundant description is not repeated.

As described above, oxide film 12 disposed at the surface of rolling part 10 in the embodiment has a thickness T of 0.5 µm or more. Accordingly, rolling part 10 in the embodiment, even if worn at its surface, does not easily flake off to expose a newly formed surface. In other words, a hydrogen generation reaction does not easily occur at the surface of rolling part 10 in the embodiment. Thus, rolling part 10 and rolling bearing 100 in the embodiment can suppress the occurrence of hydrogen embrittlement associated with the penetration of hydrogen from the surface.

A thicker oxide film 12 would require a longer time for oxide film formation process S5. As described above, thickness T of oxide film 12, disposed at the surface of rolling part 10 in the embodiment, is 2 µm or less. Thus, rolling part 10 in the embodiment requires only a short time for the manufacturing process. Also, a thicker oxide film 12 would roughen the surface of rolling part 10 in the embodiment. Rolling part 10 in the embodiment, by contrast, can suppress the roughening of the surface.

A rolling fatigue test conducted for confirming the advantageous effects of oxide film 12 will now be described.

### <Test Materials>

Table 5 shows the conditions for producing the test materials used for the rolling fatigue test. As shown in table 5, the steel type used for test materials 15 and 16 was SUJ2. For test materials 15 and 16, heating process S21 was performed at a heating temperature of 850°C under an RX gas atmosphere. For test material 15, oxide film formation process S5 was performed so that its thickness T would be 0.5 µm. For test material 16, oxide film formation process S5 was not performed.

**[Table 5]**

| | Steel type | With or without oxide film | Oxide film thickness (µm) |
|---|---|---|---|
| Test material 15 | SUJ2 | With | 0.5 |
| Test material 16 | SUJ2 | Without | - |

### <Method for Rolling Test>

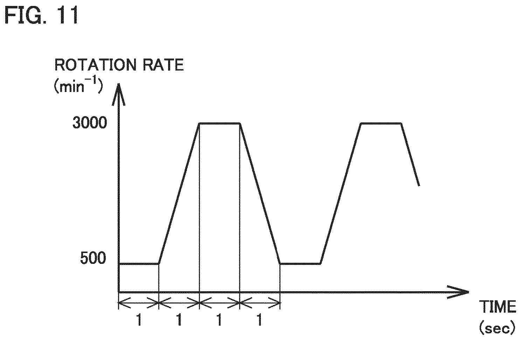

A radial needle bearing was constructed of an inner ring, an outer ring, and rollers using each test material. The rolling fatigue test was performed by rotating the inner ring relative to the outer ring with a radial load of 13.5 kN being applied to each radial needle bearing (in this state, the maximum contact pressure between the raceway surface of the inner ring and the rolling elements was 2.6 GPa by elastic Hertz contact calculation, and the maximum contact pressure between the raceway surface of the outer ring and the rolling elements was 2.3 GPa). Fig. 11 is a second graph showing the rotation conditions in the rolling fatigue test. As shown in Fig. 11, the inner ring was rotated relative to the outer ring on a 4-second cycle.

In the 4 seconds, for the first 1 second, the rotation rate was maintained at 500 rotations per minute. For the next 1 second, the rotation rate was linearly increased to 3000 rotations per minute. For the next 1 second, the rotation rate was maintained at 3000 rotations per minute. For the next 1 second, the rotation rate was linearly decreased from 3000 rotations per minute to 500 rotations per minute.

### <Results of Rolling Fatigue Test>

Table 6 shows the results of the rolling fatigue test. As shown in table 6, in the radial needle bearing with test material 16, the shortest life was 12.3 hours, and the average life was 14.6 hours. On the other hand, in the radial needle bearing with test material 15, the shortest life was 63.5 hours, and the average life was 64.4 hours. This comparison experimentally revealed that rolling part 10 in the embodiment having oxide film 12 at its surface, whose thickness T is 0.5 to 2 µm, both inclusive, can suppress the occurrence of hydrogen embrittlement associated with the penetration of hydrogen from the surface.

**[Table 6]**

| | Shortest life (h) | Average life (h) |
|---|---|---|
| Test material 15 | 63.5 | 64.4 |
| Test material 16 | 12.3 | 14.6 |

### (Configuration of Rolling Bearing in Second Embodiment)

The configuration of rolling bearing 200 in the second embodiment will now be described. The following mainly describes the differences from rolling bearing 100 in the first embodiment, and the redundant description is not repeated.

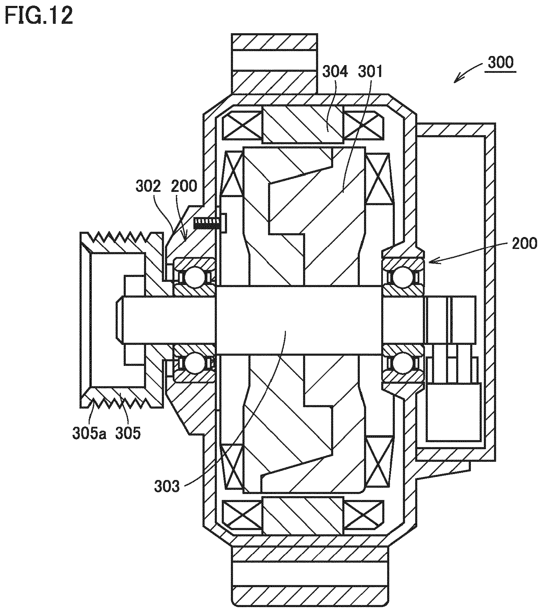

Fig. 12 is a cross-sectional view of automobile electric auxiliary equipment in which rolling bearing 200 in the second embodiment is used. As shown in Fig. 12, the automobile electric auxiliary equipment is, for example, an alternator 300. The automobile electric auxiliary equipment may be, for example, an idler pulley, an electromagnetic clutch for an automotive air conditioner, a fan coupling assembly, an intermediate pulley, or an electric fan motor.

Alternator 300 includes a rotor 301, a housing 302, a shaft 303, a stator 304, a pulley 305, and rolling bearing 200. Housing 302 encloses rotor 301. Shaft 303 passes through the center of rotor 301 and through a wall surface of housing 302. Shaft 303 is rotary-driven by motive power generated from a motive power source, such as an engine (not shown). Stator 304 faces the outer periphery of rotor 301 in housing 302.

Between shaft 303 and housing 302, rolling bearing 200 is disposed. Shaft 303 is rotatably supported by housing 302 via rolling bearing 200. That is, rolling bearing 200 is a rolling bearing for automobile electric auxiliary equipment.

Shaft 303 has one end having pulley 305 attached thereto outside housing 302. Pulley 305 has a circular ring shape. Pulley 305 has engagement grooves 305a formed on its outer periphery. A transmission belt (not shown) is laid over engagement grooves 305a.

The transmission belt, when rotated by the motive power from the engine (not shown), causes the rotary drive of shaft 303 around its central axis. Along with the rotation of shaft 303, rotor 301 rotates around the central axis of shaft 303. The rotation of rotor 301 relative to stator 304 causes electromagnetic induction between rotor 301 and stator 304, thus generating an electromotive force at the coils of stator 304.

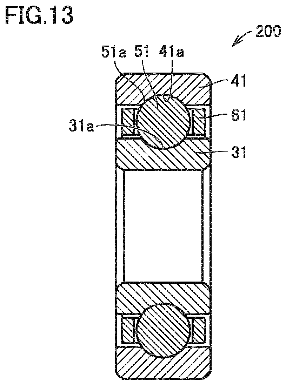

Fig. 13 is a cross-sectional view of rolling bearing 200 in the second embodiment. As shown in Fig. 13, rolling bearing 200 is, for example, a deep groove ball bearing. However, rolling bearing 200 is not limited to this. Rolling bearing 200 includes an inner ring 31, an outer ring 41, rolling elements 51, and a cage 61. Although not shown, lubricating grease is sealed in rolling bearing 200.

Inner ring 31 is in the shape of a ring. Inner ring 31 has an outer periphery 31a. Outer periphery 31a constitutes the raceway surface of inner ring 31. In inner ring 31, shaft 303 is inserted. Outer ring 41 is in the shape of a ring. Outer ring 41 has an inner periphery 41a. Inner periphery 41a constitutes the raceway surface of outer ring 41. Outer ring 41 is fixed to housing 302. Inner ring 31 and outer ring 41 are disposed in such a way that outer periphery 31a and inner periphery 41a face each other.

Each rolling element 51 has a spherical shape. Rolling elements 51 are disposed between inner ring 31 and outer ring 41. Specifically, rolling elements 51 are disposed between outer periphery 31a and inner periphery 41a. Each rolling element 51 has a surface 51a. Surface 51a constitutes the rolling contact surface of each rolling element 51.

Inner ring 31, outer ring 41, and rolling elements 51 are made of steel. The steel used for inner ring 31, outer ring 41, and rolling elements 51 is, for example, a high carbon chrome bearing steel defined by the Japanese Industrial Standards (JIS4805: 2008). The steel used for inner ring 31, outer ring 41, and rolling elements 51 may be SUJ2 or SUJ3 defined by the Japanese Industrial Standards. The steel used for inner ring 31, outer ring 41, and rolling elements 51 may be a high-speed steel, such as M50, defined by AMS 6491. At least one of the raceway surface of inner ring 31, the raceway surface of outer ring 41, and the rolling contact surface of rolling element 51 includes the above-described quench-hardened layer 11.

Cage 61 is in the shape of a ring. Cage 61 is disposed between inner ring 31 and outer ring 41. Cage 61 has through holes. Rolling elements 51 pass through the through holes in cage 61, thus being circumferentially spaced. Cage 61 is made of, for example, a resin material.

The method for manufacturing inner ring 31, outer ring 41, and rolling elements 51 is the same as the method for manufacturing rolling part 10 in the first example, and thus the description thereof is not repeated here.

### (Advantageous Effects of Rolling Bearing in Second Embodiment)

The advantageous effects of rolling bearing 200 in the second embodiment will now be described. The following mainly describes the differences from the advantageous effects of rolling bearing 100 in the first embodiment, and the redundant description is not repeated.

The rolling bearing for automobile electric auxiliary equipment is used under a high-temperature, high-speed rotation environment, during which the grease sealed in the rolling bearing is decomposed to generate hydrogen. The generated hydrogen may penetrate into the rolling parts constituting the rolling bearing, causing hydrogen embrittlement. However, in rolling bearing 200, it takes a long time for hydrogen to diffuse after entering from the surface, since at least one of the raceway surface of inner ring 31, the raceway surface of outer ring 41, and the rolling contact surface of rolling element 51 includes the above-described quench-hardened layer 11. Thus, rolling bearing 200 can suppress the occurrence of hydrogen embrittlement associated with the penetration of hydrogen from the surface.

### (Configuration of Rolling Bearing in Third Embodiment)

The configuration of rolling bearing 400 in the third embodiment will now be described. The following mainly describes the differences from rolling bearing 100 in the first embodiment, and the redundant description is not repeated.

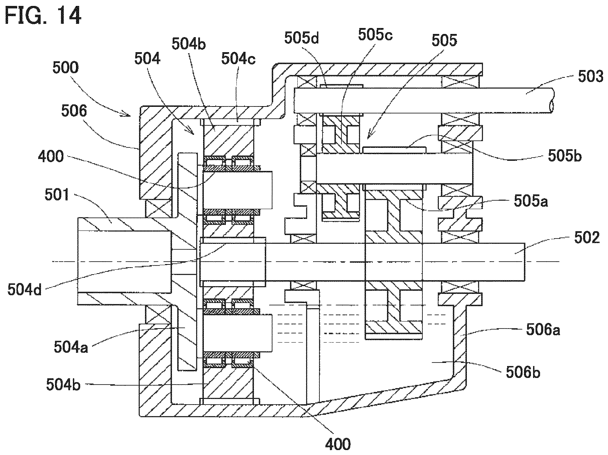

Fig. 14 is a cross-sectional view of step-up gearbox 500 in which rolling bearing 400 in the third embodiment is used. As shown in Fig. 14, step-up gearbox 500 includes an input shaft 501, an intermediate output shaft 502, an output shaft 503, a primary step-up gearbox 504, a secondary step-up gearbox 505, a housing 506, and rolling bearing 400. That is, rolling bearing 400 is a rolling bearing for step-up gearbox. Although the following describes rolling bearing 400 as a rolling bearing for step-up gearbox, rolling bearing 400 may also be used as a rolling bearing for reduction gearbox.

Primary step-up gearbox 504 is constituted of epicyclic gearing. Specifically, primary step-up gearbox 504 includes a carrier 504a, a planet gear 504b, a ring gear 504c, and a sun gear 504d. Carrier 504a is integrated with input shaft 501. Planet gear 504b is provided on carrier 504a. Sun gear 504d is integrated with intermediate output shaft 502. Ring gear 504c is engaged with planet gear 504b and sun gear 504d. Thus, the rotation of input shaft 501 is transmitted to intermediate output shaft 502 through carrier 504a, planet gear 504b, and ring gear 504c.

Rolling bearing 400 rotatably supports the shaft of planet gear 504b. Rolling bearing 400 may also rotatably support a shaft other than the shaft of planet gear 504b. Rolling bearing 400 is immersed in lubricating oil 506b stored in a lubricating oil reservoir 506a in housing 506. Lubricating oil 506b stored in lubricating oil reservoir 506a circulates through pipes and pumps (not shown).

Secondary step-up gearbox 505 includes gears 505a to 505d. The gear train constituted of gears 505a to 505d transmits the rotation of intermediate output shaft 502 to output shaft 503. Thus, step-up gearbox 500 transmits rotation of input shaft 501 to output shaft 503 while stepping up the rotation speed.

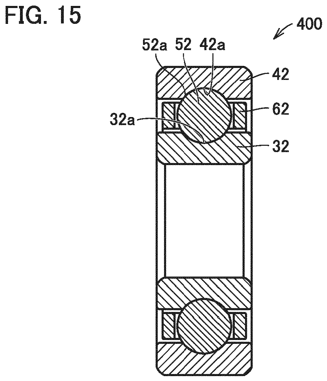

Fig. 15 is a cross-sectional view of rolling bearing 400 in the third embodiment. As shown in Fig. 15, rolling bearing 400 is, for example, a deep groove ball bearing. However, rolling bearing 400 is not limited to this. Rolling bearing 400 includes an inner ring 32, an outer ring 42, rolling elements 52, and a cage 62.

Inner ring 32 is in the shape of a ring. Inner ring 32 has an outer periphery 32a. Outer periphery 32a constitutes the raceway surface of inner ring 32. Outer ring 42 is in the shape of a ring. Outer ring 42 has an inner periphery 42a. Inner periphery 42a constitutes the raceway surface of outer ring 42. Inner ring 32 and outer ring 42 are disposed in such a way that outer periphery 32a and inner periphery 42a face each other.

Each rolling element 52 has a spherical shape. Rolling elements 52 are disposed between inner ring 32 and outer ring 42. Specifically, rolling elements 52 are disposed between outer periphery 32a and inner periphery 42a. Each rolling element 52 has a surface 52a. Surface 52a constitutes the rolling contact surface of each rolling element 52.

Inner ring 32, outer ring 42, and rolling elements 52 are made of steel. The steel used for inner ring 32, outer ring 42, and rolling elements 52 is, for example, a high carbon chrome bearing steel defined by the Japanese Industrial Standards (JIS4805: 2008). The steel used for inner ring 32, outer ring 42, and rolling elements 52 may be SUJ2 or SUJ3 defined by the Japanese Industrial Standards. The steel used for inner ring 32, outer ring 42, and rolling elements 52 may be a high-speed steel, such as M50, defined by AMS 6491. At least one of the raceway surface of inner ring 32, the raceway surface of outer ring 42, and the rolling contact surface of rolling element 52 includes the above-described quench-hardened layer 11.

Cage 62 is in the shape of a ring. Cage 62 is disposed between inner ring 32 and outer ring 42. Cage 62 has through holes. Rolling elements 52 pass through the through holes in cage 62, thus being circumferentially spaced. Cage 62 is made of, for example, a resin material.

The method for manufacturing inner ring 32, outer ring 42, and rolling elements 52 is the same as the method for manufacturing rolling part 10 in the embodiment, and thus the description thereof is not repeated here.

### (Advantageous Effects of Rolling Bearing in Third Embodiment)

The advantageous effects of rolling bearing 400 in the third embodiment will now be described. The following mainly describes the differences from the advantageous effects of rolling bearing 100 in the first embodiment, and the redundant description is not repeated.

In many cases, the gearbox is built in, for example, a wind power generator which is used outdoors. Accordingly, in the rolling bearing for gearbox, water is easily mixed into the lubricating oil and would generate a large amount of hydrogen. However, in rolling bearing 400, it takes a long time for hydrogen to diffuse after entering from the surface, since at least one of the raceway surface of inner ring 32, the raceway surface of outer ring 42, and the rolling contact surface of rolling element 52 includes the above-described quench-hardened layer 11. Thus, even under the above-mentioned situation, rolling bearing 400 can suppress the occurrence of hydrogen embrittlement associated with the penetration of hydrogen from the surface.

The embodiments of the present invention described above may be modified in various ways. The scope of the present invention is not limited to the above-described embodiments. The scope of the present invention is defined by the terms of the claims.

### INDUSTRIAL APPLICABILITY

The above-described embodiments are particularly advantageously applicable to a rolling part and a bearing using the rolling part.

### REFERENCE SIGNS LIST

10: rolling part; 10a: top face; 10b: bottom face; 10c, 41a, 42a: inner periphery; 10d, 31a, 32a: outer periphery; 11: quench-hardened layer; 12: oxide film; 20: measurement device; 21: anode tank; 22: cathode tank; 23: anode electrode; 24: cathode electrode; 25: galvanostat; 26: potentiostat; 27: test specimen; 28: anode solution; 29: cathode solution; 30, 31, 32: inner ring; 40, 41, 42: outer ring; 50, 51, 52: rolling element; 51a, 52a: surface; 60, 61, 62: cage; 100, 200, 400: rolling bearing; 300: alternator; 301: rotor; 302, 506: housing; 303: shaft; 304: stator; 305: pulley; 305a: engagement groove; 500: step-up gearbox; 501: input shaft; 502: intermediate output shaft; 503: output shaft; 504: primary step-up gearbox; 504a: carrier; 504b: planet gear; 504c: ring gear; 504d: sun gear; 505: secondary step-up gearbox; 505a, 500b, 500c, 505d: gear; 506a: lubricating oil reservoir; 506b: lubricating oil; L, T: thickness; S1: preparation process; S2: quenching process; S3: tempering process; S4: aftertreatment process; S5: oxide film formation process; S21: heating process; S22: cooling process

## Claims

1. A rolling part made of steel, the rolling part comprising: a quench-hardened layer disposed at a surface of the rolling part,
the quench-hardened layer containing nitrogen,
wherein a nitrogen concentration in the quench-hardened layer is 0.05 to 0.6 percent by weight, both inclusive,
the quench-hardened layer having a hardness of 58 to 64 HRC, both inclusive, as measured by a method defined by JIS, Z2245: 2016,
a hydrogen diffusion coefficient in the quench-hardened layer being less than 2.6 × 10⁻¹¹ m²/s, as measured by an electrochemical hydrogen permeation method as explained in the description,
an austenite phase volume ratio in the quench-hardened layer being 10 to 40 percent, both inclusive, wherein the austenite phase volume ratio in the quench-hardened layer is determined by measuring a ratio in diffraction peak intensity between an austenite phase and a martensite phase in the quench-hardened layer under X-ray diffraction,
wherein the steel is either a high carbon chrome bearing steel or a high-speed steel,
**characterized in that**
the quench-hardened layer containing oxide inclusions having a grain size of 3 µm or more, as determined according to the description, and manganese sulfide, the number of oxide inclusions at least partially covered with the manganese sulfide being more than 40 percent of the total number of oxide inclusions, as determined according to the description,
an oxide film is disposed at the surface of the rolling part, the oxide film having a thickness of 0.5 to 2 µm, both inclusive.

2. The rolling part according to claim 1, wherein the steel is a high carbon chrome bearing steel.

3. The rolling part according to claim 2, wherein the high carbon chrome bearing steel is one of SUJ2 and SUJ3.

4. A rolling bearing comprising:
an inner ring;
an outer ring; and
a rolling element disposed between the inner ring and the outer ring,
at least one of the inner ring, the outer ring, and the rolling element being the rolling part according to any one of claims 1 to 3.

5. A rolling bearing for automobile electric auxiliary equipment, the rolling bearing rotatably supporting a rotary-drivable shaft relative to a static member, the rolling bearing comprising:
an inner ring;
an outer ring; and
a rolling element disposed between the inner ring and the outer ring,
the inner ring, the outer ring, and the rolling element being made of steel,
at least one of a raceway surface of the inner ring, a raceway surface of the outer ring, and a rolling contact surface of the rolling element being the rolling part according to any one of claims 1 to 3.

6. A rolling bearing for gearbox for transmitting rotation of an input shaft to an output shaft while changing a rotation speed using a planet gear, the rolling bearing rotatably supporting the planet gear under oil lubrication, the rolling bearing comprising:
an inner ring;
an outer ring; and
a rolling element disposed between the inner ring and the outer ring,
the inner ring, the outer ring, and the rolling element being made of steel,
at least one of a raceway surface of the inner ring, a raceway surface of the outer ring, and a rolling contact surface of the rolling element being the rolling part according to any one of claims 1 to 3.

## Patentansprüche

1. Aus Stahl hergestelltes Walzteil, wobei das Walzteil umfasst:
eine abschreckgehärtete Schicht, die auf einer Oberfläche des Walzteils angeordnet ist,
wobei die abschreckgehärtete Schicht Stickstoff enthält,
wobei die Stickstoffkonzentration in der abschreckgehärteten Schicht 0,05 bis 0,6 Gewichtsprozent beträgt,
wobei die abschreckgehärtete Schicht eine Härte von 58 bis 64 HRC - durch ein durch JIS, Z2245: 2016 definiertes Verfahren gemessen - aufweist,
wobei ein Wasserstoffdiffusionskoeffizient in der abschreckgehärteten Schicht kleiner als 2,6 × 10⁻¹¹m²/s - durch ein elektrochemisches Wasserstoffpermeationsverfahren gemessen, wie in der Beschreibung erläutert - ist,
wobei ein Austenitphasenvolumenverhältnis in der abschreckgehärteten Schicht 10 bis 40 Prozent beträgt, wobei das Austenitphasenvolumenverhältnis in der abschreckgehärteten Schicht durch Messen eines Verhältnisses der Beugungsspitzenintensität zwischen einer Austenitphase und einer Martensitphase in der abschreckgehärteten Schicht unter Röntgenbeugung bestimmt wird,
wobei der Stahl entweder ein hochgekohlter Chromlagerstahl oder ein Schnellarbeitsstahl ist, **dadurch gekennzeichnet, dass**
die abschreckgehärtete Schicht Oxideinschlüsse mit einer Korngröße von 3 µm oder mehr, gemäß der Beschreibung bestimmt, und Mangansulfid enthält, wobei die Anzahl der Oxideinschlüsse, die mindestens teilweise mit dem Mangansulfid bedeckt sind, mehr als 40 Prozent der Gesamtzahl der Oxideinschlüsse, gemäß der Beschreibung bestimmt, beträgt,
ein Oxidfilm auf der Oberfläche des Walzteils angeordnet ist, wobei der Oxidfilm eine Dicke von 0,5 bis 2 µm aufweist.

2. Walzteil nach Anspruch 1, wobei der Stahl ein hochgekohlter Chromlagerstahl ist.

3. Walzteil nach Anspruch 2, wobei der hochgekohlte Chromlagerstahl einer von SUJ2 und SUJ3 ist.

4. Wälzlager, umfassend:
einen Innenring;
einen Außenring; und
einen zwischen dem Innenring und dem Außenring angeordneten Wälzkörper, wobei mindestens einer des Innenrings, des Außenrings und des Wälzkörper das Walzteil nach einem der Ansprüche 1 bis 3 ist.

5. Wälzlager für automobile elektrische Hilfsausrüstung, wobei das Wälzlager eine in Rotation versetzbare Welle relativ zu einem statischen Element drehbar stützt, wobei das Wälzlager umfasst:
einen Innenring;
einen Außenring; und
einen zwischen dem Innenring und dem Außenring angeordneten Wälzkörper,
wobei der Innenring, der Außenring und der Wälzkörper aus Stahl hergestellt sind, wobei mindestens eine von einer Laufbahnfläche des Innenrings, einer Laufbahnfläche des Außenrings und einer Wälzkontaktfläche des Wälzkörpers das Walzteil nach einem der Ansprüche 1 bis 3 ist.

6. Wälzlager für ein Getriebe zum Übertragen der Drehung einer Antriebswelle zu einer Abtriebswelle, während eine Drehzahl unter Verwendung eines Planetengetriebes geändert wird, wobei das Wälzlager das Planetengetriebe unter Ölschmierung drehbar stützt und das Wälzlager umfasst:
einen Innenring;
einen Außenring; und
einen zwischen dem Innenring und dem Außenring angeordneten Wälzkörper,
wobei der Innenring, der Außenring und der Wälzkörper aus Stahl hergestellt sind,
wobei mindestens eine von einer Laufbahnfläche des Innenrings, einer Laufbahnfläche des Außenrings und einer Wälzkontaktfläche des Wälzkörpers das Walzteil nach einem der Ansprüche 1 bis 3 ist.

## Revendications

1. Pièce roulante constituée d'acier, la pièce roulante comprenant :
une couche durcie par trempe, disposée sur une surface de la pièce roulante,
la couche durcie par trempe contenant de l'azote,
dans laquelle une concentration d'azote dans la couche durcie par trempe est de 0,05 à 0,6 pour cent en poids, inclusivement dans les deux cas,
la couche durcie par trempe ayant une dureté de 58 à 64 HRC, inclusivement dans les deux cas, telle que mesurée par une méthode définie par la norme JIS Z2245:2016,
un coefficient de diffusion de l'hydrogène dans la couche durcie par trempe étant inférieur à 2,6 × 10⁻¹¹ m²/s, tel que mesuré au moyen d'une méthode de perméation électrochimique de l'hydrogène, telle qu'expliquée dans la description,
un rapport de volume de la phase austénitique dans la couche durcie par trempe étant de 10 à 40 pour cent, inclusivement dans les deux cas, dans laquelle le rapport de volume de la phase austénitique dans la couche durcie par trempe est déterminé par mesure d'un rapport d'intensité de pic de diffraction entre une phase austénitique et une phase martensitique dans la couche durcie par trempe sous diffraction des rayons X,
dans laquelle l'acier est soit un acier pour roulements à haute teneur en carbone-chrome soit un acier rapide,
**caractérisée en ce que :**
la couche durcie par trempe contient des inclusions d'oxyde ayant une taille de grains supérieure ou égale à 3 µm, telle que déterminée selon la description, et du sulfure de manganèse,
le nombre d'inclusions d'oxyde au moins partiellement recouvertes du sulfure de manganèse étant supérieur à 40 pour cent du nombre total d'inclusions d'oxyde, tel que déterminé selon la description, un film d'oxyde est disposé à la surface de la pièce roulante, le film d'oxyde ayant une épaisseur de 0,5 à 2 µm, inclusivement dans les deux cas.

2. Pièce roulante selon la revendication 1, dans laquelle l'acier est un acier pour roulements à haute teneur en carbone-chrome.

3. Pièce roulante selon la revendication 2, dans laquelle l'acier pour roulements à haute teneur en carbone-chrome est soit de l'acier SUJ2 soit de l'acier SUJ3.

4. Palier à roulement comprenant :
une bague intérieure ;
une bague extérieure ; et
un élément roulant disposé entre la bague intérieure et la bague extérieure,
au moins l'un de la bague intérieure, de la bague extérieure et de l'élément roulant étant la pièce roulante selon l'une quelconque des revendications 1 à 3.

5. Palier à roulement pour équipement électrique auxiliaire automobile, le palier à roulement supportant en rotation un arbre pouvant être entraîné en rotation par rapport à un élément statique, le palier à roulement comprenant :
une bague intérieure ;
une bague extérieure ; et
un élément roulant disposé entre la bague intérieure et la bague extérieure,
la bague intérieure, la bague extérieure et l'élément roulant étant constitués d'acier,
au moins l'une d'une surface de chemin de roulement de la bague intérieure, d'une surface de chemin de roulement de la bague extérieure et d'une surface de contact de roulement de l'élément roulant étant la pièce roulante selon l'une quelconque des revendications 1 à 3.

6. Palier à roulement pour boîte de vitesses permettant de transmettre la rotation d'un arbre d'entrée à un arbre de sortie, tout en modifiant une vitesse de rotation à l'aide d'un satellite, le palier à roulement supportant en rotation le satellite lors d'un graissage par huile, le palier à roulement comprenant :
une bague intérieure ;
une bague extérieure ; et
un élément roulant disposé entre la bague intérieure et la bague extérieure,
la bague intérieure, la bague extérieure et l'élément roulant étant constitués d'acier,
au moins l'une d'une surface de chemin de roulement de la bague intérieure, d'une surface de chemin de roulement de la bague extérieure et d'une surface de contact de roulement de l'élément roulant étant la pièce roulante selon l'une quelconque des revendications 1 à 3.
